Europäisches Patentamt

European Patent Office

Office européen des brevets

(11) Publication number: **0 219 952**
A1

## (12) EUROPEAN PATENT APPLICATION

(21) Application number: 86306761.7

(22) Date of filing: 02.09.86

(51) Int. Cl.⁴: **C04B 28/34** ,
//(C04B28/34,14:08,20:10,22:00-,24:06)

(30) Priority: **15.10.85 US 787407**

(43) Date of publication of application:
**29.04.87 Bulletin 87/18**

(84) Designated Contracting States:
**BE DE FR GB NL**

(71) Applicant: STAUFFER CHEMICAL COMPANY

Westport Connecticut 06881(US)

(72) Inventor: Sherif, Fawzy Gamaleldin
2 Babcock Court
Stony Point New York 10980(US)
Inventor: Tieckelmann, Robert Hugo
2 Charles Place
Ossining New York 10562(US)

(74) Representative: Smith, Sydney et al
Elkington and Fife High Holborn House 52/54
High Holborn
London WC1V 6SH(GB)

(54) Magnesium phosphate fast-setting cementitious compositions containing set retardants.

(57) Improved magnesium phosphate fast-setting cementitious compositions containing a synergistic combination of an oxy-boron compound and hydroxycarboxylic acid, or its salt or acid derivative. These compositions form a hardened mass when water is added at ambient temperatures. The incorporation of the oxy-boron compound and hydroxycarboxylic acid, or its salt or acid derivative within these compositions retards the initial setting time, increases the early compressive strength of the resulting hardened mass by allowing a reduced amount of water to be added to the compositions and increases the final compressive strength. These compositions include a solid activator containing a $P_2O_5$ material, e.g. ammonium phosphate fertilizer, absorbed onto a porous material, e.g. diatomaceous earth.

# MAGNESIUM PHOSPHATE FAST-SETTING CEMENTITIOUS COMPOSITIONS CONTAINING SET RETARDANTS

## BACKGROUND OF THE INVENTION

### 1. Field of the Invention

This invention relates to fast-setting magnesium phosphate cementitious compositions. More particularly, it relates to improved compositions containing a synergistic combination of an oxyboron compound and a hydroxycarboxylic acid or its salts or derivatives which retards the initial setting time, reduces the amount of water required, and increases both the early and final strength of the resulting hardened mass.

### 2. Related Developments

Cementitious compositions having a very fast setting time and prepared by mixing a magnesium-containing component with an ammonium phosphate component and an optional aggregate are popular for use in repairing or patching cracks, holes and spalled areas of highways, airfield pavements and bridge decks, as well as for a variety of commercial and industrial applications.

U.S. Patent No. 3,879,209 (Limes et al., April 22, 1975) discloses a process for making such a fast-setting concrete comprising establishing a mixture of an aggregate, containing at least 10 percent by weight of magnesia, and ammonium phosphates in aqueous solution. This patent discloses that a commercial agricultural fertilizer product known as sequestered phosphatic solution (SPS) is particularly suitable as a source of the ammonium phosphate. This reference is one of many references which disclose a class of magnesium phosphate fast-setting cementitious compositions which when mixed with an aqueous component set at ambient temperatures in substantially less than one-half hour after mixing. The strength development of these compositions is sufficiently rapid to permit, e.g. automobile traffic thereover, within a few hours following application. Additionally, these compositions exhibit excellent adhesion to various substrates, e.g. Portland cement concrete and steel, and they attain high compressive strength and are quite durable.

U.S. Patent No. 2,522,548 (Streicher, September 19, 1950) discloses the preparation of phosphate gel binders by reacting metal oxides e.g. magnesium oxide and primary phosphate solutions. Streicher further discloses that borax acts as an accelerating agent up to about 0.5 percent based on the amount of filler used in the phosphate gel binder. However, by adding more than 0.5 percent of borax and up to 1 percent thereof an increased retarder action is produced. However, this reference is directed to the use of these phosphate gel binders in a refractory application and further states that the primary ammonium phosphate is not effective in its process.

U.S. Patent No. 3,475,188 (Woodhouse, October 28, 1969) discloses a refractory composition comprising a liquid bonding agent, for example, sequestered phosphatic solution, that is diammonium phosphate and polyphosphate, absorbed onto an absorbent, for example quartzite, and a particulate refractory substance containing MgO. This reference states that advantageously 0.5 to 2 percent of boric acid can be incorporated and that short setting times were considered undesirable. However, nowhere does this reference state that boric acid overcomes this undesirably short setting time. This reference further states that phosphoric acid and magnesia resulted in relatively low strength chemically bonded compositions due to their rapid reaction. Again, this reference is directed to refractory compositions and does not disclose the compositions of the present invention.

U.S. Patent No. 3,333,972 (Elmer et al., August 1, 1967) discloses a cementitious refractory material consisting essentially of an intimate admixture of finely divided, non-plastic magnesia and from 0.1 percent of 15 percent of at least one substance chosen from the group consisting of an aliphatic hydroxytricarboxylic acid and a salt of said acid. A preferred acid is citric acid. This reference does not disclose the improved, fast-setting magnesium phosphate cementitious composition of this invention.

U.S. Patent No. 4,089,692 (Toeniskoetter et al., May 16, 1978) discloses settable compositions containing aluminum phosphate, a solid organic carboxylic acid, water and material containing an alkaline earth metal and an oxide. Suitable acids include lactic acid, tartaric acid, citric acid, oxalic acid, malonic acid and gluconic acid. The fast-setting cementitious compositions of this reference all include aluminum phosphate. These compositions are significantly different from the improved compositions of this invention.

U.S. Patent No. 427,591 (Martin et al., May 13, 1890) discloses the use of citric acid as a retarder for the setting of sulfate of lime base cements or plaster of paris. Again this reference does not disclose the unique fast-setting magnesium phosphate cementitious compositions of this invention.

U.S. Patent No. 2,116,910 (Piccard, May 10, 1938) discloses plasters for the production of surgical casts which comprise an anhydrous mixture of a basic compound containing no element having an atomic weight greater than that of phosphorus as, for example, the oxides, hydroxides or carbonates of lithium, sodium, beryllium, aluminum, magnesium, etc. and an acid or acid salt likewise containing no such heavy elements as, for example, organic acids, as benzoic acids, salicylic acids, oxalic acids, etc. or salts of ammonia or an alkali metal with an inorganic acid, as phosphoric acid, etc., as diammonium hydrogen phosphate, ammonium dihydrogen phosphate, or other water soluble phosphates. This reference does not disclose the unique fast-setting magnesium phosphate cementitious compositions of this invention.

U.S. Patent No. 4,028,125 (Martin, June 7, 1977) discloses Portland cement compositions containing hydroxypolycarboxylic acids and their salts, e.g. citric acid or tartaric acid, as set retarders. This reference is limited to Portland cement compositions.

European Patent Application No. 0133733 discloses a particularly effective solid phosphorus pentoxide material suitable for use in these fast-setting magnesium phosphate cements. This material is prepared by a process which comprises mixing a porous material with a liquid phosphorus pentoxide material and heating the mixture until a dry solid is produced. This solid phosphorus pentoxide material can then be dry blended with a solid component comprising magnesium oxide, magnesium hydroxide, magnesium carbonate or mixtures thereof. An aggregate can optionally be added to this dry blend. When hydrated, this dry blend has been found particularly advantageous in the fast-setting magnesium phosphate cement applications described above. However, when the ambient temperature is high, e.g. in the summer time or year round in tropical climates, the initial setting time of this composition is reduced. Setting times of from about 1 to about 10 minutes do not allow the operator to properly mix the material and apply it in its end use application prior to the material setting and thereby becoming unworkable. A composition with a retarded initial setting time would be advantageous. However, this retarded setting time should not be so long that the advantages of the fast-setting cement are lost. The retarder used in the cement should not reduce high early strength thereby allowing, for example, traffic to flow after pot hole repair within a few minutes.

U.S. Patent No. 3,960,580 (Stierli et al., June 1, 1976) discloses that the setting time of quick-setting magnesium oxide/ammonium phosphate concretes can be extended by the addition of specified oxy-boron compounds such as sodium borate. This reference further discloses that the incorporation of these oxy-boron compounds have also been found to increase only the extended or overall compressive strength of the composition. The oxy-boron compounds used as retarders reduce the high early strength of the cement. This is a significant disadvantage because high early strength should be a major property of fast-setting magnesium phosphate cements. The phosphate component of the cementitious compositions disclosed by Stierli et al. appears to contemplate either a dry solid monoammonium phosphate component, or a solid monoammonium phosphate component comprising a mixture of monoammonium phosphate and another solid phosphate selected from diammonium phosphate and sodium pyrophosphate. A solid activator component comprising a $P_2O_5$ material absorbed onto a porous material is not contemplated or disclosed.

Because the normally fast-setting magnesium phosphate cements set even more rapidly with increasing ambient temperature, the time allowed for working these compositions, e.g. for mixing the composition with water and applying to, for example, a pot hole, becomes substantially reduced at the higher ambient temperatures. This reduction of working time poses a problem especially in summer and in tropical environments when the ambient temperature is significantly above 70°F. Attempts at on-the-spot corrective measures by the work crew such as adding additional water usually adversely affects the strength of the composition and accelerates setting time rather than retarding setting time as reported by Stierli et al. There is a need, therefore, for a practical method of retarding the setting time without sacrificing high early compressive strength and thereby extending the working time of the magnesium phosphate fast-setting cementitious compositions and particularly the more effective generation of fast-setting cements as disclosed in European Patent Application No. 0133733.

Copending European Patent Application No. Attorneys reference SS 4994, based on U.S. Patent Application S.N. 773,262, discloses improved magnesium phosphate fast-setting cementitious compositions containing a carboxylic acid, salt or acid derivative to retard the initial setting time, increase the early compressive strength of the resulting hardened mass by allowing a reduced amount of water to be added to the composition. This application does not describe the use of the unique, synergistic combination of additives described herein.

SUMMARY OF THE INVENTION

An object of this invention is to provide fast-setting magnesium phosphate cementitious compositions that give adequate working time at high ambient temperatures while maintaining the other desirable properties of these compositions. It is a further object of this invention to provide fast-setting magnesium phosphate cementitious compositions that exhibit a retarded initial setting time and increased initial and final compressive strength of the hardened cementitious mass resulting after hydration and setting.

Other objects and advantages of the present invention are described elsewhere within this specification.

In accordance with the present invention, an improved dry fast-setting magnesium phosphate cementitious composition has now been discovered which is capable of setting to a hardened mass at ambient temperatures following the addition of water thereto which comprises: a) a solid activator comprising a $P_2O_5$ material absorbed onto a porous material; b) a magnesium-containing component; and c) a mixture of an oxy-boron compound and a hydroxycarboxylic acid, salt or acid derivative, said mixture in an amount effective to retard the setting time and increase the compressive strength of the resulting hardened mass. The solid activator of this composition can be prepared by i) mixing a porous material with a liquid $P_2O_5$ material to form a semi-solid; ii) drying the semi-solid; and iii) milling the dried semi-solid. The cementitious compositions of this invention can further comprise an aggregate.

## DETAILED DESCRIPTION OF THE INVENTION

The dry fast-setting magnesium phosphate cementitious compositions of this invention generally comprise three essential constituents: a) a solid activator; b) a magnesium-containing component, and c) a mixture of an oxy-boron compound and a hydroxycarboxylic acid, salt or acid derivative, and mixture in an amount effective to retard the setting time and increase the compressive strength of the resulting hardened mass.

The solid activator component is a composite comprising a $P_2O_5$ material absorbed onto a porous material. This activator can be prepared by mixing a porous material with a liquid phosphorus pentoxide material then heating the mixture until a dry solid is produced. The dry solid is then milled.

The term "$P_2O_5$ material" is used throughout this specification to described material containing phosphorus values. The phosphorus content of these materials is usually analyzed and expressed as $P_2O_5$, hence the term "$P_2O_5$ material".

The liquid phosphorus pentoxide material can be any material containing free or available $P_2O_5$ such as green acid. This material can be selected from various industrial and agricultural chemicals and wastes. Some examples of suitable $P_2O_5$ materials include aluminum phosphate solution; ammonium phosphate solution; calcium phosphate solution; bright dip phosphoric acid from metal polishing processes; phosphoric acid; waste phosphoric acid from agricultural chemical processes; steel phosphatizing sludge acid resulting from the pickling of steel to inhibit corrosion; arsenic sulfide sludge acid resulting from the treatment of $P_2O_5$ waste streams with $H_2S$ to remove arsenic; and any combination of the above liquids.

The liquid $P_2O_5$ material can further include various acidic phosphorus compounds, e.g. orthophosphoric acid, pyrophosphoric acids and other polyphosphoric acids and their salts.

A preferred liquid $P_2O_5$ material is ammonium phosphate fertilizer solution. This fertilizer solution contains a mixture of ortho-and polyphosphates and in its original aqueous state undergoes continuous hydrolysis while standing whereby the weight ratios of the different phosphate forms keep changing, usually from high polyphosphate and low orthophosphate contents to low polyphosphate and high orthophosphate contents as the fertilizer ages. The polyphosphates of this fertilizer solution can include pyro-, tri-, tetra-, etc., phosphate species. Because of this continuous hydrolysis, magnesium phosphate cements using liquid ammonium phosphate fertilizer by itself as the $P_2O_5$ component exhibit unpredictable qualities. Usually, when a fresh fertilizer solution is used, the cement mixture does not set at all or only forms a weak cement, and when an older fertilizer solution is used, the cement sets very rapidly with little or no working time to apply the cement. Liquid fertilizer solution upon standing precipitates hard to handle insolubles, and in cold weather the liquid freezes and gels creating more handling problems.

A particularly preferred fertilizer solution is PolyN[(R)] 10-34-0 ammonium polyphosphate solution supplied by Arcadian Company and used primarily as an agricultural fertilizer. A typical analysis of the Poly-N[(R)] brand fertilizer shows 10.0 weight percent ammoniacal nitrogen and 34 weight percent total $P_2O_5$. Sixty percent of the total $P_2O_5$ is polyphosphate. The commercial product contains approximately 2 weight percent of impurities, which do not adversely effect its use in preparing the solid activator. The major impurities comprise approximately 0.5 weight percent iron, 0.5 weight percent sulfur, 0.2 weight percent magnesium (as MgO) and 0.15 weight percent of fluorine. This commercial product also contains approximately 50 weight percent water.

A particularly preferred liquid $P_2O_5$ material is Poly-N[R] 10-34-0 ammonium polyphosphate solution which has been pre-treated by adding orthophosphoric acid thereto up to about 50 weight percent of the fertilizer solution.

When the fertilizer solution is absorbed onto the porous material of this invention, the fertilizer is held in a bound form and this composition is much more thermally stable in a temperature range of from ambient to about 120°C, than the original fertilizer solution. The resulting dry solid maintains a constant phosphate distribution between the ortho-and polyphosphate species and does not hydrolyze as the original fertilizer solution would.

The porous material which can be employed in this invention includes diatomaceous earth, kieselguhr, artificially prepared porous silica, vermiculite, alumina, and such naturally occurring substances as various fuller's earth and clays such as bentonite, montmorillonite, acid treated clays and the like. Each porous material which may be used will exert its own specific influence upon the solid activator formed and the resulting fast-setting cement which will not necessarily be identical with that of other members of the class. The porous material can be inert or partially inert. Members of the class of porous material can be used separately or in combination with each other.

A preferred porous material is diatomaceous earth. The highly porous diatomaceous earth can absorb much more than 80 percent by weight, based on the weight of diatomaceous earth, of a phosphate-containing liquid, e.g. liquid ammonium phosphate fertilizer solution, and absorption of 225 percent and above are preferred. Upon drying the diatomaceous earth with the phosphate-containing liquid absorbed therein, the solid $P_2O_5$ activator forms.

The diatomaceous earth can comprise from about 30 percent to about 90 percent by weight of the solid activator with about 30 percent to about 65 percent being preferred; can have a density of from 7.0 to 19.5 pounds/cubic foot (0.112 to 0.312 gms/cc); can have a water absorption value of from 170 percent to 255 percent by weight; and can have a surface area of from 1 to 100M²/g. It is believed that when diatomaceous earth is mixed with liquid ammonium phosphate fertilizer and heated to form the dry solid activator, more than a physical entrapment of the $P_2O_5$ material occurs.

The liquid $P_2O_5$ material is mixed with the porous material at ambient temperature to form a semi-solid, slurry or paste. The amount of liquid $P_2O_5$ material added is important. Amounts up to that which will fill the pores of the porous material can be used with one drying step. Amounts exceeding the pore volume of the porous material can be absorbed with several drying steps. The semi-solid, slurry or paste is heated to a temperature of from about 60°C to about 200°C to drive off moisture and other volatile impurities until a dry solid is produced.

The rate of heating is adjusted so that, upon drying, the pores of the porous material are not blocked with the $P_2O_5$ material, but remain available to the aqueous component when the cement is made. Sufficient porous material should be used to have enough pore volume available to absorb a suitable amount of the $P_2O_5$ material. Upon drying, most of the aqueous component will be driven off, leaving solid $P_2O_5$ material deposited inside and over the walls of the microscopic pores.

The starting materials, i.e. the liquid $P_2O_5$ material, and the porous material are mixed in a preferred embodiment in the proportions necessary to form a dry solid comprising from about 10 percent to about 70 percent by weight of the $P_2O_5$ material and from about 30 percent to about 90 percent by weight of the porous material in the resulting solid activator.

The solid activator prepared as described above is dry blended with a magnesium-containing component and a mixture of an oxy-boron compound and a hydroxycarboxylic acid, salt or acid derivative to yield a dry cementitious composition capable of setting to a hardened mass at ambient temperatures when reacted when an aqueous component. The solid activator can optionally be milled and classified prior to being dry blended with the other components of the cementitious composition. The activator typically has a particle size range of from 100 to 325 mesh and a surface area of from 0.1 to 10 M²/g.

The solid activator can range from about 6 weight percent to about 90 weight percent of the cementitious composition, with a range from about 10 weight percent to about 25 weight percent being preferred.

The magnesium-containing component can be any material capable of releasing magnesium ions making said ions available to react to form a magnesium phosphate. Preferred magnesium-containing compounds are magnesium oxide, magnesium hydroxide and magnesium carbonate. These compounds must be capable of being dry blended with the solid activator without reacting therewith. However, in the presence of an aqueous component the dry blend will react to form a monolithic solid. Mixtures of these magnesium compounds can also be employed. Magnesium borate can be used both as a source of magnesium ions and the oxy-boron compound.

A preferred magnesium-containing component is MgO. This MgO can be of low reactivity, of high reactivity or a mixture of low and high reactivity wherein the ratio of the constituents of the mixture is selected to achieve the working time and cement strength desired. This preferred magnesium-containing component can usually be from about 4 percent to about 50 percent by weight of the overall compositions, with from about 5 to about 15 percent by weight being preferred.

The hydroxycarboxylic acid, salt or acid derivative used in the mixture with the oxy-boron compound can include, for example, citric acid, salicylic acid, saccharic acid, hydroxyglutamic acid, etc. The acid or salts or other derivatives containing the hydroxycarboxylic moiety, e.g., esters, amides, alcohols, etc. can be used. Citric acid, or its salts, e.g., diammonium citrate, or its esters are preferred species. These preferred species will be used throughout the specifications for the hydroxycarboxyliccontaining moiety. However, this use is only illustrative and should not be construed as a limitation on the type of useful hydroxycarboxylic-containing moiety. Mixtures of these hydroxycarboxylic-containing moieties can be employed with the oxy-boron compound if desired.

The oxy-boron compound used in the mixture of this invention generally comprises those boron compounds containing at least one boron-oxygen linkage, hereinafter termed "oxy-boron" compounds. These compounds include, e.g., oxy acids of boron which contain one or more boron atoms such as, e.g., boric acid; salts of such acids, such as the alkali metal salts thereof, for example sodium borate (e.g. borax) and amine or ammonium salts thereof such as, e.g. ammonium borate; and esters of such acids, such as trialkoxy borates and triaryloxy borates, e.g. trimethyl borate. These oxy-boron additives can be added to the fast – setting compositions as already formed or preformed compounds, or boron-containing starting materials which yield oxy-boron additives upon contact with water can be used to generate the additive in situ. Mixtures of the above oxy-boron compounds with the citric acid based materials can also be employed. A particularly preferred oxy-boron compound is boric acid.

The mixture of oxy-boron compound and hydroxycarboxylic acid, salt or acid derivative of this invention can be added to the fast-setting compositions and slurries of this invention in a variety of ways. They can be added as a dry solid by direct addition or by preblending with another dry solid, e.g., the magnesium-containing component. They can be added as a solution by dissolving them in the water used to hydrate the cement composition. They can also be added by dissolving them in the liquid $P_2O_5$ material that is absorbed onto the porous material during the preparation of the activator.

Generally, the fast-setting cementitious compositions of this invention can be used for producing fast-setting concrete structures, e.g., structures suitable for roadway construction and roadway patches or other load-bearing uses. However, in its broader aspects, the invention is generally applicable to preparing concrete structures with various characteristics, e.g., high or low strength, for a variety of other purposes as well. The characteristics of any particular concrete structures formed can depend upon the weight ratio of the various components, the nature of the aggregate employed, the temperature conditions of application and the curing conditions as well as other factors.

Fast-setting cement can be applied indoors or outdoors to concrete drives, storage yards, warehouse and factory floors to repair and restore damaged surfaces. Fast-setting cement can be used to fill structural cracks in slabs, and repair highway median barrier walls. This type of cement can be used in almost any situation requiring a quick, permanent repair of concrete. In addition, the fast-setting cement can be used for binding and coating metals and woods for structural and flame resistance applications.

A particular aggregate, preferably graded sand, can be included in the dry blend in a controlled amount as a filler. Aggregate can greatly enhance the strength of the hardened concrete cement. Aggregate usage can range from 0 percent to 90 percent by weight of the dry mix containing aggregate with a range of from about 40 percent to about 80 percent by weight of the dry mix plus aggregate being preferred. Other aggregate materials which can be used include particles of competent rocks or rock-forming minerals such as granite, basalt, dolomite, andesite, feldspar, amphibole, pyroxene, olivine, gabbro, rhyolite, syenite, diorite, dolerite, peridotite, trachyte, obsidian, quartz, etc., as well as materials such as slag, cinders fly ash, glass cullet, wood chips, and fibrous materials such as chopped metal wire - (preferably steel), glass fibers, asbestos, cotton, and polyester and aramide fibers. Aggregates having different particle shapes and sizes can be used. Mixtures of different aggregates can also be used. The porous material used to absorb the liquid $P_2O_5$ material can further function as an aggregate.

The dry blend remains a free flowing powder until it is contacted with an aqueous component, preferably water, then a reaction occurs forming a fast-setting cement. The amount of aqueous component used is important. Too much water can convert the dry blend into a thin slurry that will not set until substantial dehydration occurs; and, too little water will not wet the dry blend sufficiently to allow the necessary chemical reaction. The optimum amount of water will depend upon the particular physical characteristics of the constituents of the dry blend, e.g., absorbency, surface area, etc. However, the optimum amount of water must be sufficient to adequately wet the dry blend and optional aggregate mixture to form a thick slurry or non-collapsible putty. This optimum amount of water can be determined on a blend by blend basis. The optimum amount of water can also depend upon the weight of the mixture of oxyboron compound and hydroxycarboxylic acid or acid derivative, the weight of the aggregate, and the temperature at which the cement is hydrated. Usually, the higher the weight of the mixture of oxy-boron compound and hydroxy carboxylic acid or acid derivative, the lower is the amount of water needed. The amount of water used can range from about 5 weight percent to about 15 weight percent of the overall composition with from about 8 to about 12 weight percent being preferred.

Generally, the setting time for fast-setting magnesium phosphate cements varies widely and can range from a few seconds up to a few hours. As a practical matter, the setting time must be sufficient to allow the dry blend to be thoroughly mixed with the aqueous component to form a slurry or a non-collapsible putty and be applied to the intended area, whether a mold or a patch, prior to hardening into a monolithic solid. In quantitative terms, fast-setting usually means that the cement hardens in less than 30 minutes, usually in about 1 to 15 minutes, and reaches more than 1,500 psi compressive strength in usually less than 2 hours.

The fast-setting magnesium phosphate cementitious compositions of this invention are characterized by a normal setting time of less than 1/2 hour, more often less than about 15 minutes, depending on the ambient temperature. It has been found that this initial setting time can be delayed within the range of from about 1 minutes up to about 35 minutes or longer depending on the amount of the mixture of oxy-boron compound and hydroxycarboxylic acid or acid derivative used.

It has been found that when the mixture of oxy-boron compound and hydroxycarboxylic acid or acid derivative is included in the composition of this invention, the initial set time is increased and both the early and final compressive strength of the resulting concrete is increased. In fact the overall strength development over time of the concrete is increased. For example, the compressive strength of the concrete after 24 hours can be substantially greater than the compressive strength of concrete containing either an oxy-boron compound or a hydroxycarboxylic acid or acid derivative alone. The retarding mixture of oxy-boron compound and hydroxycarboxylic acid or acid derivative exhibits even further synergism. The set retardation resulting from the use of this synergistic combination is greater than that which results from the use alone of either of the constituents of the mixture.

The amount of the mixture of oxy-boron compound and hydroxy carboxylic acid or acid derivative used in the compositions of this invention can vary according to the degree of retardation desired. Generally, an amount of hydroxycarboxylic acid or acid derivative in the mixture ranging from about 0.1 to about 10 percent, preferably about 0.1 to about 5 percent by weight of the cementitious composition has been found suitable. For example, a particularly preferred level of 0.5 weight percent of citric acid in the mixture has been found to be highly effective in both retarding setting time and achieving high early and final compressive strength.

The amount of oxy-boron compound used in the mixture can vary. Generally an amount of oxy-boron compound in the mixture ranging from about 0.1 to about 10 weight percent, preferably about 0.1 to about 5 percent by weight of the cementitious composition has been found suitable. A particularly preferred level of 0.25 weight percent of boric acid in the mixture with citric acid has been found to be highly effective in both retarding setting time and achieving high early and final compressive strength.

A further benefit of this invention is that the use of the synergistic mixture of, e.g., citric acid and boric acid rather than either alone is more cost effective because more of the less costly citric acid can be used while set retardation resulting is better than if boric acid alone was used.

Diammonium phosphate (DAP) can optionally be added to the cementitious compositions of this invention to enhance the flow characteristics of the cementitious slurry resulting after hydration. Amounts of DAP ranging from about 0.1 to about 5 weight percent of the composition are preferred.

In a particular embodiment of the fast-setting magnesium phosphate cementitious composition of this invention, the solid activator is prepared by mixing diatomaceous earth with liquid ammonium phosphate fertilizer and orthophosphoric acid to form a semi-solid, drying the semi-solid and milling the dried semi-solid; the magnesium-containing component is a mixture of active and dead burned magnesium oxide; the retarder mixture is citric acid and boric acid; and the aggregate is graded silica. The resulting cement will exhibit increased set time and increased early and final compressive strength.

The following experiments describe various embodiments of the invention. Other embodiments will be apparent to one of ordinary skill in the art from a consideration of this specification or practice of the invention disclosed therein. It is intended that the specification and experiments be considered as exemplary only, with the true scope and spirit of the invention being indicated by the claims which follow the experiments.

EXPERIMENTS

Activators were made by mixing 630 grams of Poly-N[(R)]10-34-0 brand ammonium phosphate fertilizer solution (sold by Arcadian Chemical Company), 270 grams of orthophosphoric acid and 400 grams of diatomaceous earth Standard Super Cell grade (Manville Corporation) then treating the mixture by heating at 120°C for 16 hours. The resulting dry solid was milled to allow 60 weight percent to pass through 200 mesh. Cementitious mixes containing 14.9 weight percent of this activator combined with 8.4 weight percent grams of MgO (9:1 dead burned:active MgO), 1.2 weight percent diammonium phosphate and 75 weight percent of graded silica aggregate of maximum size 1/4 inch were prepared. To these mixtures, various blends of citric acid/boric acid were added. These mixtures are 25:75 fast-setting blends because the aggregate is kept at 75 weight percent while the total of the other active components are kept at 25 weight percent.

The various blends of citric acid/boric acid were added by dry blending it thoroughly with the cementitious mix at room temperature of about 25°C. Water (ten parts per hundred parts of the dry mix) was added to each mix which was then stirred for 3 minutes. The resulting slurry was poured into a 2" x 4" mold. The initial set time and the compressive strength of the resulting concrete were measured.

The following Table I summarizes the results obtained.

## TABLE I

### EVALUATION OF CITRIC ACID\BORIC ACID BLENDS IN FAST-SETTING CEMENTS

| Run | Wt. % Citric Acid | Wt. % Boric Acid | Percent Flow[c] | Initial Set Time, Mins. | Compressive Strength psi/2 hrs. |
|-----|------|------|------|------|------|
| 1a  | —    | —    | 57 | 11 | 2700 |
| 2a  | —    | 0.25 | 58 | 20 | 2900 |
| 3a  | —    | 0.50 | 65 | 29 | 1800 |
| 4a  | 0.50 | —    | 53 | 17 | 2500 |
| 5a  | 1.0  | —    | 55 | 17 | 2900 |
| 6a  | 0.50 | 0.25 | 58 | 25 | 3000 |
| 7b  | —    | —    | 60 | 12 | 2100 |
| 8b  | —    | 0.25 | 58 | 21 | 2900 |
| 9b  | —    | 0.50 | 60 | 27 | 1600 |
| 10b | 0.50 | —    | 57 | 17 | 2800 |
| 11b | 0.75 | —    | 60 | 19 | 2600 |
| 12b | 0.50 | 0.25 | 62 | 25 | 2700 |

[a] Contains 8.4 weight percent MgO
[b] Contains 7.4 weight percent MgO
[c] Determined using a flow table

The above data indicates that the combination of citric acid/boric acid is synergistic. Runs 6 and 12 yield the best overall results because the % flows are acceptable, the initial set times are substantially retarded, and the compressive strengths are substantially increased when compared with the Controls (Runs 1 and 7 respectively). It is noted that even though 0.5 weight % of boric acid alone - (Runs 3 and 9) substantially retards the setting time, the compressive strength is significantly reduced when compared with the controls (Runs 1 and 7) or with the synergistic combination of citric acid/boric acid (Runs 6 and 12).

**Claims**

1. An improved dry fast-setting magnesium phosphate cementitious composition capable of setting to a hardened mass at ambient temperatures following the addition of water thereto which comprises:

a) a solid activator comprising a $P_2O_5$ material absorbed onto a porous material;

b) a magnesium-containing component; and

c) a mixture of an oxy-boron compound and a hydroxycarboxylic acid, salt or acid derivative said mixture in an amount effective to retard the setting time and increase the compressive strength of the resulting hardened mass

2. The cementitious composition of Claim 1 wherein the solid activator is prepared by:

i) mixing a porous material with a liquid $P_2O_5$ material to form a semi-solid,

ii) drying the semi-solid, and

iii) milling the dried semi-solid.

3. The cementitious composition of Claim 2 wherein the porous material is diatomaceous earth and the $P_2O_5$ material is liquid ammonium phosphate fertilizer.

4. The cementitious composition of Claim 3 wherein the $P_2O_5$ material is liquid ammonium phosphate fertilizer and orthophosphoris acid.

5. The cementitious composition of Claim 1 wherein the magnesium-containing component is magnesium oxide, hydroxide, carbonate or mixtures thereof.

6. The cementitious composition of Claim 1 wherein the mixture of oxy-boron compound and hydroxycarboxylic acid, salt or acid derivative is blended with the magnesium-containing component.

7. The cementitious composition of Claim 1 which further comprises an aggregate.

8. The cementitious composition of Claim 1 wherein the oxy-boron compound is selected from the group consisting of oxy acids or boron, salts and esters thereof, and mixtures thereof.

9. The cementitious composition of Claim 1 wherein the hydroxycarboxylic acid, salt or acid derivative is citric acid, salt or acid derivative.

10. The cementitious composition of Claim 4 wherein the magnesium-containing component is magnesium oxide, the mixture is boric acid and citric acid and which further comprises a silica aggregate.

11. The cementitious composition of Claim 1 wherein the mixture of oxy-boron compound and citric acid, salt or acid derivative is blended with the solid activator.

12. An improved fast-setting magnesium phosphate cementitious composition capable of setting at ambient temperatures to a hardened mass as claimed in any of claims 1 to 11 which also includes water.

13. A cementitious composition as claimed in claim 12 wherein the $P_2O_5$ material is liquid ammonium phosphate fertilizer and orthophosphoric acid, the porous material is diatomaceous earth, the magnesium-containing component is magnesium oxide, the mixture is boric acid and citric acid and which further comprises a silica aggregate.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| E,Y | EP-A-0 203 658 (STAUFFER) <br> * Abstract; claims 1,2,6,8-10; page 6, lines 17-20 * | 1-8,12 | C 04 B 28/34 // <br> (C 04 B 28/34 <br> C 04 B 14:08 <br> C 04 B 20:10 <br> C 04 B 22:00 |
| Y | DE-A-2 126 521 (Th. CHVATAL) <br> * Claims 1,3; page 7, lines 23-26 * | 1-8,12 | C 04 B 24:06 ) |
| D,A | EP-A-0 133 733 (STAUFFER) <br><br> * Claims 1,3,4,14,18; page 10, lines 29,30 * | 1-5,7, 12 | |
| A | FR-A-2 291 951 (GRACE & CO.) <br><br> * Claims 1,4,5,8-10 * | 1,4,7, 8,10, 12 | |
| D,A | US-A-4 089 692 (R.H. TOENISKOETTER) <br> * Abstract; column 9, lines 39,40 * | 1 | **TECHNICAL FIELDS SEARCHED (Int. Cl.4)** <br><br> C 04 B 28/00 <br> C 04 B 35/00 |
| A | US-A-4 226 626 (R.H. TOENISKOETTER) <br> * Claims 1,11,15; column 3, lines 19-24 * | 1 | |
| A | US-A-2 225 831 (W. HERZ) | | |

The present search report has been drawn up for all claims

| Place of search | Date of completion of the search | Examiner |
|---|---|---|
| THE HAGUE | 07-01-1987 | DAELEMAN P.C.A. |